# EUROPÄISCHE PATENTSCHRIFT

(11) **EP 3 323 565 B1**
(45) Veröffentlichungstag und Bekanntmachung des Hinweises auf die Patenterteilung: **30.06.2021**
(21) Anmeldenummer: 16199731.7
(22) Anmeldetag: 21.11.2016
(51) Int. Cl.: B25J 9/16

(54) **VERFAHREN UND VORRICHTUNG ZUR INBETRIEBNAHME EINES MEHRACHSSYSTEMS**
METHOD AND DEVICE FOR COMMISSIONING A MULTIPLE AXIS SYSTEM
PROCÉDÉ ET DISPOSITIF DE MISE EN SERVICE D'UN SYSTÈME MULTIAXIAL

(43) Veröffentlichungstag der Anmeldung: 23.05.2018
(73) Patentinhaber: Siemens Aktiengesellschaft, 80333 München (DE)
(72) Erfinder: Walter, Maximilian, 90408 Nürnberg (DE); Hamadou, Mehdi, 91052 Erlangen (DE); Richter, Jan, 91207 Lauf a. d. Pegnitz (DE)

(56) Entgegenhaltungen:
- EP-A1- 2 230 054
- EP-A2- 2 783 812
- DE-A1- 10 226 140
- DE-T5-112014 000 700

## Beschreibung

Die Erfindung betrifft ein Verfahren und eine Vorrichtung zur Inbetriebnahme eines Mehrachssystems. Das Mehrachssystem umfasst als Komponenten eine Anzahl an Segmenten, die über jeweilige Gelenke verbunden sind und in ein oder mehreren Achsen bewegbar sind, sowie ein Werkzeug, das mit einem der Segmente verbunden ist und an eine vorgegebene Position bewegbar und ansteuerbar ist. Dem Mehrachssystem ist ein Arbeitsraum, in dem ein Aufenthalt und/oder eine Bewegung der Komponenten erlaubt ist, und zumindest ein Schutzraum zugeordnet, in welchen ein Eindringen der Komponenten nicht erlaubt ist.
Mehrachssysteme sind universelle, programmierbare Maschinen zur Handhabung, Montage oder Bearbeitung von Werkstücken. Diese werden auch als (Industrie-)Roboter bezeichnet. Diese sind für den Einsatz im industriellen Umfeld konzipiert. Einmal programmiert, ist ein solches Mehrachssystem in der Lage, einen Arbeitsablauf autonom durchzuführen, oder die Ausführung einer Aufgabe abhängig von Sensorinformationen in Grenzen zu variieren.

Die Gefahren, die von solchen Mehrachssystemen ausgehen, bestehen in den für einen Menschen oft völlig unvorhersehbaren, komplexen Bewegungsmustern und starken Beschleunigungen bei gleichzeitig enormen Kräften. Arbeiten neben einem ungesicherten Mehrachssystem können daher schnell schwere Verletzungen für eine in der Nähe des Mehrachssystems befindliche Person zur Folge haben.
Um derartige Unfälle zu vermeiden, ist eine sichere Überwachung der Position, einer positionsabhängigen Überwachung der Geschwindigkeit, einer Beschleunigung und der Orientierung von sich bewegenden Komponenten des Mehrachssystems erforderlich. Dies trifft insbesondere auf solche Arbeitsumgebungen zu, in denen ein Mehrachssystem in Kooperation mit einem Menschen zusammenarbeiten soll.
Eine Voraussetzung für die korrekte und sichere Funktionsweise eines solchen Mehrachssystems ist die Definition von Hüllkörpern für die sich bewegenden Komponenten sowie die korrekte Definition von Schutz- und Arbeitsräumen. Hüllkörper können verschiedene geometrische Abmessungen und Formen aufweisen. Übliche verwendete Hüllkörper sind z.B. Kugeln, Quader oder aus mehreren Quadern zusammengesetzte Gebilde. Die Definition von Hüllkörpern sowie die Festlegung von Schutz- und Arbeitsräumen ermöglicht eine Kooperation eines Mehrachssystems mit Menschen, solange sichergestellt ist, dass kein Hüllkörper einer Komponente des Mehrachssystems in einen Schutzraum eindringt. Werden bei der Definition dieser Körper Fehler gemacht, führt dies dazu, dass im laufenden Betrieb z.B. das Eindringen eines Hüllkörpers in einen Schutzbereich nicht erkannt wird, sodass eine Sicherheitsfunktion fälschlicherweise nicht ausgelöst wird.

Es ist bekannt, Koordinaten, Dimensionen und Orientierung der Hüllkörper der Komponenten eines Mehrachssystems manuell in ein Programm oder eine Datenbank einzugeben. Neben einem hohen manuellen Aufwand weist dieses Vorgehen den Nachteil auf, dass eine Überprüfung der aus der Eingabe resultierenden Hüllkörper anfällig gegen Denk- und Eingabefehler ist. Eine weitere bekannte Möglichkeit ist die Definition von Schutzräumen durch Bewegen des Werkzeugs des Mehrachssystems an die Ecken aller sich nicht bewegender Körper, d. h. der Schutzräume und des Arbeitsraums, bei gleichzeitiger Erfassung und Speicherung entsprechender Koordinaten. Diese Variante ist jedoch nur für Hüllkörper sich nicht bewegender Räume geeignet, jedoch nicht für Hüllkörper der sich bewegenden Komponenten des Mehrachssystems.

Aus der EP 2 783 812 A2 ist ein Verfahren bekannt, bei dem ein Mehrachssystem aus Komponenten, welche über Gelenke miteinander Verbunden und in zumindest einer Achse bewegbar sind, wobei dem Mehrachssystem ein Arbeitsraum zugeordnet ist, in dem ein Aufenthalt erlaubt ist, und ein Schutzraum zugeordnet ist, in welchen das Eindringen nicht erlaubt ist. Auch in dem Dokument DE 11 2014 00700 T5 ist ein Modellierungsprozeß beschrieben für beispielsweise eine Roboterhand, aus verschiedenen sphärischen Körpern wobei ein Minimaleinschlussvolumen berechnet wird für eine Interferenzprüfung.
Die genannten Methoden arbeiten "punktorientiert". Ein die Hüllkörper definierender Benutzer muss daher die Hüllkörper gedanklich aus mehreren Punkten im dreidimensionalen Raum zusammensetzen. Dies erfordert eine hohe kognitive Leistung und ist daher anfällig für Fehler. Darüber hinaus ist es nicht einfach zu erkennen, ob ein Hüllkörper eines Segments des Mehrachssystems dieses auch wirklich vollständig enthält. Ein weiteres Problem besteht darin, dass nicht ohne weiteres festgestellt werden kann, ob ein definierter Hüllkörper dem korrekten Segment der Kinematik des Mehrachssystems zugeordnet ist. Wenn dies nicht der Fall ist, befindet sich dieser Hüllkörper im Ruhezustand zwar am korrekten Segment, folgt aber bei einer Bewegung nicht dem ihm eigentlich zugeordneten Segment, sondern z.B. einem anderen Segment.
Es ist Aufgabe der Erfindung, ein Verfahren und eine Vorrichtung anzugeben, die die Inbetriebnahme eines Mehrachssystems rechnergestützt auf zuverlässigere Weise ermöglichen.
Diese Aufgabe wird gelöst durch ein Verfahren gemäß den Merkmalen des Patentanspruches 1 und eine Vorrichtung gemäß den Merkmalen des Patentanspruches 15. Vorteilhafte Ausgestaltungen ergeben sich aus den abhängigen Patentansprüchen.
Gemäß einem ersten Aspekt wird ein Verfahren zur Inbetriebnahme eines Mehrachssystems vorgeschlagen. Das Mehrachssystem umfasst als Komponenten eine Anzahl an Segmenten und ein Werkzeug. Die Anzahl an Segmenten ist über jeweilige Gelenke paarweise verbunden und durch eine Steuerung in einer oder mehreren Achsen bewegbar. Das Werkzeug ist mit einem der Segmente verbunden und durch die Steuerung an eine vorgegebene Position bewegbar und ansteuerbar. Dem Mehrachssystem ist ein Arbeitsraum zugeordnet, in dem ein Aufenthalt und/oder eine Bewegung der Komponenten des Mehrachssystems erlaubt ist. Ferner ist dem Mehrachssystem zumindest ein Schutzraum zugeordnet, in welchen ein Eindringen der Komponenten nicht erlaubt ist.
Zur Inbetriebnahme des Mehrachssystems werden die folgenden Schritte ausgeführt: Es wird eine Mehrzahl an optischen Markern in der Umgebung des Mehrachssystems angeordnet, um es einem Augmented Reality (AR)-System zu ermöglichen, die Position und Orientierung eines Kamerasystems, welches zumindest eine Kamera umfasst und das Mehrachssystem aus einer Umgebung erfasst, zu bestimmen. Für jede der Komponenten wird ein Hüllkörper definiert und dieser zugeordnet, wobei ein einer Komponente zugeordneter Hüllkörper die zugeordnete Komponente, insbesondere vollständig, einschließt. Anschließend wird eine Überprüfung der definierten Hüllkörper in Bezug auf den Arbeitsraum und den Schutzraum mittels des AR-Systems durchgeführt, indem bei einer Bewegung des Mehrachssystems im Raum die Position der Hüllkörper in einem ersten, globalen Koordinatensystem (Weltkoordinatensystem) berechnet und in ein zweites Koordinatensystem entsprechend einer Position und Orientierung des Kamerasystems (Kamerakoordinatensystems) transformiert wird, wobei die in das zweite Koordinatensystem transformierten Hüllkörper zusammen mit einem von dem Kamerasystem aufgenommenen Bild in dem AR-System visualisiert werden.

Durch das vorgeschlagene Verfahren wird eine funktional sichere Definition und Überprüfung der Hüllkörper sowie der Schutz- und Arbeitsbereiche mit Hilfe des AR-Systems ermöglicht. Eventuell auftretende Fehler bei der Definition der Hüllkörper oder bei der Zuordnung eines Hüllkörpers zu einer jeweiligen Komponente des Mehrachssystems können durch die Möglichkeit der visuellen Überprüfung in dem AR-System auf einfache und schnelle Weise festgestellt werden. Darüber hinaus ist das vorgeschlagene Verfahren weniger anfällig für Denkfehler.
Gemäß einer zweckmäßigen Ausgestaltung werden Positionskoordinaten der optischen Marker in dem ersten, globalen Koordinatensystem ermittelt und in der Steuerung gespeichert. Die Ermittlung der Positionskoordinaten kann auf unterschiedliche Weise erfolgen.
In einer Variante wird zur Ermittlung der Positionskoordinaten der optischen Marker ein TCP (Tool Center Point) des Werkzeugs des Mehrachssystems auf einen jeweiligen optischen Marker bewegt. Weiter werden die, der Steuerung bekannten Positionskoordinaten des TCP als die Positionskoordinaten des optischen Markers ermittelt und gespeichert. Dies bedeutet, gemäß dieser Ausgestaltung wird das Werkzeug, insbesondere mit dessen TCP, an den Ort des optischen Markers bewegt. Diese Bewegung kann manuell in einem sogenannten Tipp-Betrieb oder automatisch erfolgen. Da die Steuerung des Mehrachssystems bei einer manuellen oder automatisch durchgeführten Bewegung des Werkzeugs die Positionskoordinaten des Werkzeugs bzw. dessen TCP kennt, kann die Position des optischen Markers und dessen Positionskoordinaten ermittelt werden.
In einer anderen Alternative werden zur Ermittlung der Positionskoordinaten eines jeweiligen optischen Markers eine auf dem Werkzeug, insbesondere den TCP, angebrachte Markierung und der gerade verarbeitete optische Marker durch das AR-System erfasst. Es wird eine Entfernung zwischen der Markierung und dem optischen Marker ermittelt. Die Position des Werkezeugs wird iterativ verändert bis die Entfernung minimal ist. Die der Steuerung bekannten Positionskoordinaten des Werkzeugs, insbesondere des TCP, werden bei minimalem Abstand als die Positionskoordinaten des optischen Markers ermittelt und gespeichert.
Der TCP ist ein im Umfeld von Mehrachssystemen gedachter und dem Fachmann bekannter Referenzpunkt, der sich an geeigneter Stelle an dem Werkzeug befindet. Um zu beschreiben, welche Lage das Werkzeug des Mehrachssystems einnimmt, ist es ausreichend, die Position und Orientierung des TCP im Raum, d.h. im globalen Koordinatensystem zu definieren.

Die zweite Variante zur Ermittlung der Positionskoordinaten ermöglicht es, die Positionskoordinaten der jeweiligen optischen Marker automatisiert zu ermitteln. Dabei wird ein iteratives Suchverfahren verwendet, bei dem das Werkzeug bzw. der TCP solange bewegt wird, bis der Abstand zwischen dem Werkzeug bzw. TCP und dem gerade betrachteten optischen Marker minimal wird. Dieses Vorgehen wird für alle optischen Marker wiederholt.
Die Markierung, die am Werkzeug bzw. TCP angebracht ist, kann eine optische Markierung sein, welche durch das AR-System visuell erfassbar ist. Bei der Markierung kann es sich alternativ um eine Entfernungsmesseinheit handeln. Dies kann z.B. ein Laser-Messgerät sein, das die Entfernung zu einem vor ihm liegenden Punkt misst. Diese kann beispielsweise eine Funkschnittstelle umfassen, um eine zwischen der Markierung und dem betrachteten optischen Marker gemessene Entfernung an das AR-System zu übertragen. Anhand der übertragenen Entfernung kann dann die Steuerung eine gezielte Bewegung des Mehrachssystems vornehmen, um die Entfernung in iterativen Schritten zu dem jeweils betrachteten optischen Marker zu minimieren. Die Bestimmung der Positionskoordinaten der jeweiligen optischen Marker erfolgt wiederum aus der Kenntnis der Positionskoordinaten des TCP bei minimaler Entfernung zwischen dem betrachteten optischen Marker und dem Werkzeug bzw. TCP.
Gemäß einer weiteren zweckmäßigen Ausgestaltung wird die Entfernung durch die Entfernungsmesseinheit ermittelt und an das AR-System bzw. die Steuerung zur weiteren Auswertung übertragen.
Eine weitere Ausgestaltung sieht vor, dass die Positionskoordinaten der optischen Marker an das AR-System übertragen werden, wobei das AR-System anhand der optisch erfassten Marker und den zugeordneten Positionskoordinaten die Position und Orientierung des Kamerasystems in dem ersten, globalen Koordinatensystem ermittelt.

Zur Definition eines jeweiligen Hüllkörpers kann vorgesehen sein, dass eine Anzahl an Positionskoordinaten eines temporär in der Umgebung des Mehrachssystems angeordneten Hilfsmarkers durch das Kamerasystem erfasst und dessen Positionskoordinaten durch das AR-System ermittelt werden. Mit Hilfe des Hilfsmarkers können beispielsweise Stützpunkte der Hüllkörper (z.B. Eckpunkte bei einem Quader oder mehrere Punkte auf der Oberfläche einer Kugel) definiert werden. Hierzu hält ein Nutzer den Hilfsmarker an die gewünschte Position eines Stützpunkts. Beispielsweise nach der Betätigung eines Eingabegeräts zur Bestätigung eines bestimmten Stützpunkts werden die Positionskoordinaten durch das AR-System ermittelt und abgespeichert. Sind alle Stützpunkte eingegeben, kann der Hüllkörper berechnet und gespeichert werden. In gleicher Weise können die Schutz- und Arbeitsräume definiert werden.
In einer Alternative kann zur Definition eines jeweiligen Hüllkörpers dieser nach Art und Dimension der Komponente erzeugt und in dem AR-System mittels eines in der Umgebung des Mehrachssystems angeordneten Hilfsmarkers iterativ solange hinsichtlich Position und Orientierung verändert werden, bis dieser die zugeordnete Komponente einhüllt. Bei dieser Ausgestaltung werden für jede Komponente vorab geeignete Hüllkörper definiert und erzeugt. Deren genaue Lage bzw. Größe kann dann mit Hilfe des AR-Systems unter zu Hilfenahme der bereits erwähnten Hilfsmarker vorgenommen werden.
Eine weitere Ausgestaltung sieht vor, dass in dem AR-System der Arbeitsraum oder zumindest ein Schutzraum visualisiert werden. Mit Hilfe des AR-Systems kann dann geprüft werden, ob die zuvor definierten und gespeicherten Hüllkörper, Schutz- und Arbeitsräume mit der Realität übereinstimmen. Fehlerhaft wäre es z.B., wenn ein Hüllkörper zu klein ist, und ein Teil des Mehrachssystems nicht eingehüllt ist. Diese Prüfung kann manuell erfolgen, d.h. durch Betrachtung des augmentierten Kamerabildes. Alternativ kann die Prüfung auch automatisch erfolgen. Wenn z.B. das Mehrachssystem orange lackiert ist, die überlagerten Hüllkörper aber blau in der Visualisierung eingefärbt sind, darf im augmentierten Bild kein blaues Pixel mehr vorkommen. Diese Prüfung kann durch eine Bilderkennungssoftware erfolgen.
Um es dem AR-System zu ermöglichen, die Position und Orientierung des Kamerasystems festzustellen, müssen in den von dem Kamerasystem aufgenommenen Bilddaten ein oder mehrere Marker erkennbar sein. Unter Umständen kann es vorkommen, dass in dem von dem Kamerasystem aufgenommenen Daten kein oder zu wenig optische Marker enthalten sind. In diesem Fall ist es zweckmäßig, wenn eine Anzahl an weiteren, temporären Markern in der Umgebung des Mehrachssystems angeordnet wird, wobei die Positionskoordinaten der Anzahl an temporären Markern durch Bildverarbeitung eines Bilds, in dem die Anzahl an temporären Markern und die Mehrzahl an optischen Markern enthalten sind, bestimmt werden. Um die Positionskoordinaten der temporären Marker somit bestimmen zu können, ist es erforderlich, das Kamerasystem vorab derart zu positionieren und auszurichten, sodass sowohl die Anzahl an temporären Markern als auch eine ausreichende Anzahl an optischen Markern in den Bilddaten enthalten sind.
Die in dieser Beschreibung genannten optischen Marker können z.B. spezielle Aufkleber, spezielle Gegenstände oder dergleichen sein. Ebenso ist es möglich, als optische Marker prägnante Kanten und/oder Ecken der Umgebung zu definieren.
Die Erfindung schlägt ferner ein Computerprogrammprodukt vor, das direkt in den internen Speicher eines digitalen Computers geladen werden kann und Softwarecodeabschnitte umfasst, mit denen die Schritte gemäß des in dieser Beschreibung beschriebenen Verfahrens ausgeführt werden, wenn das Produkt auf einem Computer läuft. Ein Computer kann in diesem Sinne die Gesamtheit aus der beschriebenen Steuerung sowie dem AR-System sein.
Gemäß einem zweiten Aspekt wird eine Vorrichtung zur Inbetriebnahme eines Mehrachssystems vorgeschlagen. Das Mehrachssystem umfasst als Komponenten eine Anzahl an Segmenten und ein Werkzeug. Die Anzahl an Segmenten ist über jeweilige Gelenke verbunden und in einer oder mehreren Achsen bewegbar. Das Werkzeug ist mit einem der Segmente verbunden und an eine vorgegebene Position bewegbar und ansteuerbar.
Dem Mehrachssystem ist ein Arbeitsraum, in dem ein Aufenthalt und/oder eine Bewegung der Komponenten erlaubt ist, und zumindest ein Schutzraum zugeordnet, in welchen ein Eindringen der Komponenten nicht erlaubt ist.
Die Vorrichtung umfasst eine Steuerung zur Ansteuerung der Komponenten des Mehrachssystems. Die Vorrichtung umfasst ein Kamerasystem mit zumindest einer Kamera, welches das Mehrachssystem aus einer Umgebung erfasst. Die Vorrichtung umfasst ein Augmented Reality (AR)-System, das das von dem Kamerasystem erfasste Bild erfasst und verarbeitet. Das AR-System ist dazu eingerichtet, für jede der Komponenten einen Hüllkörper zu definieren und dieser zuzuordnen, wobei ein einer Komponente zugeordneter Hüllkörper die zugeordnete Komponente, insbesondere vollständig, einschließt. Die Vorrichtung umfasst eine Mehrzahl an optischen Markern in der Umgebung des Mehrachssystems, um es dem AR-System zu ermöglichen, die Position und Orientierung des die Umgebung des Mehrachssystems erfassenden Kamerasystems zu bestimmen. Schließlich umfasst die Vorrichtung eine Ausgabevorrichtung des AR-Systems, die eingerichtet ist, eine Überprüfung der definierten Hüllkörper in Bezug auf den Arbeitsraum und den Schutzraum durchzuführen, in dem bei einer Bewegung des Mehrachssystems im Raum die Position der Hüllkörper in einem ersten, globalen Koordinatensystem berechnet und in ein zweites Koordinatensystem entsprechend einer Position und Orientierung des Kamerasystems transformiert wird. Die in das zweite Koordinatensystem transformierten Hüllkörper werden zusammen mit dem von dem Kamerasystem aufgenommenen Bild in der Ausgabevorrichtung des AR-Systems visualisiert.
Die erfindungsgemäße Vorrichtung weist die gleichen Vorteile auf, wie sie vorstehend in Verbindung mit dem erfindungsgemäßen Verfahren beschrieben wurden. Die Vorrichtung kann weitere Mittel zur Durchführung des Verfahrens aufweisen.
Die Erfindung wird nachfolgend näher anhand eines Ausführungsbeispiels in der Zeichnung erläutert.

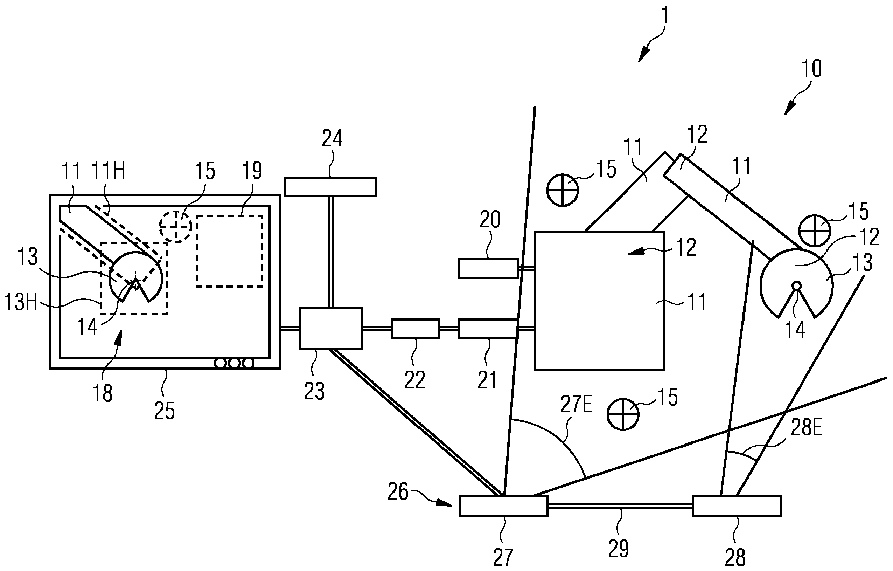

Fig. 1 zeigt in einer schematischen Darstellung eine erfindungsgemäße Vorrichtung 1 zur Inbetriebnahme eines Mehrachssystems 10. Das Mehrachssystem 10 kann beispielsweise ein Industrieroboter, eine Produktions- oder Verpackungsmaschine, eine CNC-Fräsmaschine, ein Verladekran oder dergleichen sein. Unter einem Mehrachssystem ist jedoch auch eine Fertigungszelle mit einer Mehrzahl an derartigen Maschinen zu verstehen.
In der schematischen Darstellung der Fig. 1 umfasst das Mehrachssystem 10 eine Anzahl an Segmenten 11, welche paarweise über ein Gelenk 12 miteinander verbunden sind. An einem freien Ende eines letzten Segments 11 ist beispielhaft ein Werkzeug 13 mit einem TCP (Tool Center Point) 14 angeordnet. Mittels des TCP wird die Werkzeugposition des Mehrachssystems 10 beschrieben. Der TCP ist ein Referenzpunkt, der sich an geeigneter Stelle an dem Werkzeug 13 befindet.

Die Kinematik des Mehrachssystems 10 wird von einer Steuerung 20 angesteuert. Die Steuerung, z.B. eine speicherprogrammierbare Steuerung (SPS), kann durch eine Recheneinheit bereit gestellt sein. Darüber hinaus umfasst das Mehrachssystem 10 funktional sichere Sensoren (nicht dargestellt) zur Erfassung der Achspositionen der Kinematik, d. h. der einzelnen Segmente 11 und Gelenke 12. Die Werte der funktional sicheren Sensoren werden durch eine funktional sichere Steuerung (sogenannte F-SPS) auf der ein funktional sicheres Programm abläuft, eingelesen. Durch die funktional sichere Steuerung 21 kann die Position des TCP der Kinematik des Mehrachssystems 10 berechnet werden. Die funktional sichere Steuerung 21 berechnet auch die aktuelle Position der Kinematik-Hüllkörper in einem sog. Weltkoordinatensystem. Sie prüft, ob es eine Überschneidung zwischen später beschriebenen Hüllkörpern und den Schutzräumen gibt, oder ob ein Hüllkörper den Arbeitsraum verlässt. Darüber hinaus besteht die Aufgabe der funktional sicheren Steuerung 21 darin, das Einhalten einer Maximalgeschwindigkeit während eines manuellen Betriebs des Mehrachssystems, der zur Durchführung eines Verfahrensschritts während der Inbetriebnahme des Mehrfachsystems notwendig sein kann, zu überwachen. Tritt einer dieser Fälle ein, wird eine Sicherheitsfunktion ausgeführt, z.B. das Stillsetzen der Kinematik.
Obwohl in dem dargestellten Ausführungsbeispiel die Steuerung 20 und die funktional sichere Steuerung 21 als getrennte Komponenten gezeigt sind, können die Steuerung 20 und die funktional sichere Steuerung 21 auch durch eine einzige Steuerung verwirklicht sein.
Die Vorrichtung umfasst ein Programmiergerät 22, das an die Steuerung und/oder die funktional sichere Steuerung 21 angeschlossen ist, um ein Programm bzw. Parameter in die Steuerung 20 bzw. funktional sichere Steuerung 21 zu laden sowie von diesen berechnete Werte auszulesen.
Die Vorrichtung 1 umfasst darüber hinaus ein Kamerasystem 26. Das Kamerasystem 26 umfasst eine erste Kamera 27, welche die Umgebung des Mehrachssystems 10 erfasst. Das von der ersten Kamera 27 erfasste Bild wird zur Ermittlung der Position des Kamerasystems und der Orientierung des Kamerasystems 26 genutzt. Darüber hinaus umfasst das Kamerasystem 26 eine optionale zweite Kamera 28. Die optionale zweite Kamera 28 dient dazu, einen bestimmten Ausschnitt (in dieser Beschreibung auch als Szene bezeichnet) aufzunehmen. Sofern das Kamerasystem neben der ersten Kamera 27 auch die optionale zweite Kamera 28 umfasst, sind diese mittels einer starren Verbindung 29 miteinander verbunden. Dadurch sind die Position und Orientierung der ersten und der zweiten Kamera 27, 28 zueinander bekannt. Die in diesem Ausführungsbeispiel gezeigte Verwendung von zwei Kameras 27, 28 erlaubt eine Beobachtung der Szene aus verschiedenen Winkeln. Im vorliegenden Ausführungsbeispiel sind ein Erfassungsbereich der ersten Kamera 27 mit 27E und ein Erfassungsbereich der zweiten Kamera 28 mit 28E gekennzeichnet. Es ist ohne weiteres ersichtlich, dass der Erfassungsbereich 27E das Mehrachssystem 10 im Gesamten erfasst, während der Erfassungsbereich der 28E der zweiten Kamera 28 derart gewählt ist, dass insbesondere das Werkzeug 13 und ein Teil des das Werkzeug 11 haltenden Segments erfasst werden. Die Verwendung einer zweiten Kamera reduziert darüber hinaus das Risiko einer Verdeckung von Teilen des Mehrachssystems 10.
Die Vorrichtung 1 umfasst darüber hinaus ein AR-System 23, welches das von der ersten Kamera 27 erfasste Bild einliest und die Position der ersten Kamera 27 beziehungsweise des Kamerapaars durch Auswertung der Bildinformation ermittelt. Das Bild der zweiten Kamera 28 und Informationen aus der funktional sicheren Steuerung 21 werden ebenfalls durch das AR-System eingelesen, miteinander kombiniert und an eine Ausgabevorrichtung 25 zur Visualisierung weitergeleitet.
Das AR-System 23 kann in Software realisiert sein und auf dem Programmiergerät 22 ausgeführt werden. Alternativ kann das AR-System 23, wie gezeigt, als eigenständige Komponente realisiert sein. In diesem Fall besteht eine Kommunikationsverbindung zu dem Programmiergerät 22.
An das AR-System 23 ist eine Ausgabevorrichtung 25 angeschlossen, die in diesem Ausführungsbeispiel das von der zweiten Kamera 28 erfasste Bild anzeigt. Zusätzlich werden von dem AR-System 23 den in dem gezeigten Bildausschnitt sichtbaren Komponenten (hier ein Segment 11 und das Werkzeug 12) definierte Hüllkörper, welche nachfolgend näher beschrieben werden, überlagert. Die Ausgabevorrichtung 25 kann ein Rechner, wie z.B. ein PC, ein Laptop, ein Tablet, ein Smartphone, aber auch eine AR-Brille und jedes sonstige Gerät zur Darstellung zweidimensionaler oder dreidimensionaler Bilder sein. Um Fehler in der Ausgabevorrichtung 25 zu erkennen, können auch diversitäre Ausgabevorrichtungen, z.B. eines während der Definition der nachfolgend näher beschriebenen Hüllkörper, und ein anderes während der Prüfung, verwendet werden.
In einer alternativen Ausgestaltung können die erste und die zweite Kamera 27, 28 die Ausgabevorrichtung 25 mit dem AR-System 23 in einem gemeinsamen Gerät vereint sein.

In der Umgebung des Mehrachssystems 10 ist eine Anzahl an Markern 15 verteilt. Lediglich beispielhaft sind in der Darstellung der Fig. 1 drei solcher Marker 15 gezeigt. Bei den Markern 15 kann es sich um optische Marker, wie z.B. Aufkleber, aber auch Gegenstände mit einer bestimmten Form und/oder Farbe handeln. Allgemein können als optische Marker 15 jedoch auch ausgewählte Kanten und/oder Ecken oder andere prägnante Bestandteile des Mehrachssystems 10 und/oder der Umgebung des Mehrachssystems verwendet werden. Es ist zweckmäßig, wenn die Marker 15 gleichmäßig im Raum angeordnet sind. Mittels der Marker 15 ist es dem AR-System 23 möglich, eine genaue Positionsbestimmung sowie eine Ermittlung der Position und Orientierung des Kamerasystems 26 vorzunehmen. Falls das AR-System Marker zur Positionsbestimmung nicht benötigt, da andere Komponenten und/oder technische Einheiten zur Positionsbestimmung genutzt werden, brauchen die Marker 15 nicht optisch durch das Kamerasystem 26 erfassbar sein.
Die funktional sichere Definition und Überprüfung von Hüllkörpern sowie von Schutz- und Arbeitsräumen wird durch das nachfolgend näher beschriebene Verfahren erreicht.

In einem ersten Schritt werden an geeigneten Stellen mehrere der Marker 15 angeordnet, die dem AR-System 23 eine exakte Lokalisation des Kamerasystems 26 ermöglichen. Die Stellen der Platzierung der Marker 15 werden derart ausgewählt, dass die Marker 15 aus möglichst vielen Blickwinkeln für das Kamerasystem 26 erfassbar sind.
Im nächsten Schritt wird die Position der Marker 15 in einem globalen Koordinatensystem der Kinematik des Mehrachssystems 10 ermittelt. Dies erfolgt z.B. dadurch, dass der TCP 14 des Werkzeugs 13 auf einen jeweiligen Marker 15 bewegt wird und die Position durch das Eingabegerät 24 bestätigt wird. Durch eine funktional sicher implementierte und ausgeführte Vorwärtstransformation der funktional sicheren Steuerung 21 können die kartesischen Koordinaten des betreffenden Markers 15 sicher ermittelt werden. Die Marker 15 sind danach im globalen Koordinatensystem des Mehrachssystems 10 ermittelt.
Das Bewegen des TCP auf einen jeweiligen Marker 15 kann beispielsweise manuell, im sogenannten Tipp-Betrieb erfolgen. Ebenso kann das Bewegen des TCP auf einen betreffenden Marker automatisch erfolgen. Dazu wird am TCP 14 des Werkzeugs 12 eine Markierung angebracht, sodass das AR-System 23 in die Lage versetzt wird, die Entfernung des TCP 14 zu den jeweiligen Markern 15 zu berechnen. Für einen gegebenen Marker 15 werden die Segmente 11 des Mehrachssystems im Rahmen eines Suchverfahrens solange bewegt, bis dieser Abstand minimal wird. Dieses Vorgehen wird für alle Marker 15 wiederholt.
In einer weiteren alternativen Vorgehensweise des Automatikbetriebs lässt sich durch das Anbringen eines Laserentfernungsmessgeräts mit Funkschnittstelle (nicht dargestellt) am TCP 14 realisieren. Das AR-System 23 erkennt den Laserspot im Kamerabild, z.B. durch Einschalten/Ausschalten eines Lasers des Entfernungsmessgeräts und Beobachten der Pixel im Kamerabild. Gleichfalls erkennt das AR-System 23 den Marker 15 und berechnet den Abstand zwischen dem Laserspot und dem betreffenden Marker 15. Dabei liest das AR-System 23 die gemessene Entfernung aus dem Entfernungsgerät per Funk und kombiniert sie mit den Koordinaten des TCP aus der Steuerung 20 des Mehrachssystems 10. Die Steuerung 20 bewegt anschließend die Kinematik des Mehrachssystems 10 entsprechend dem berechneten Abstand bis der Laserspot mit dem Marker 15 überlagert ist. Dieser Vorgang wird solange ausgeführt bis alle Marker 15 im Koordinatensystem des Mehrachssystems 10 gemessen wurden.
In einem nächsten Schritt erfolgt die Übertragung der Positionskoordinaten der Marker 15 von der funktional sicheren Steuerung 21 in das AR-System 23. Das AR-System 23 ist dadurch in der Lage, aus einem bewegten Bild des Kamerasystems 26, das die Marker 15 enthält, auf die Position und Richtung des Kamerasystems im globalen Koordinatensystem zu schließen.
Falls die zuvor erfassten Marker 15 nicht ausreichend sind, die Position und Richtung des Kamerasystems 26 zu ermitteln, da beispielsweise nicht alle oder nicht ausreichend viele Marker 15 aus allen nötigen Blickwinkeln sichtbar sind, können weitere temporäre Marker in der Umgebung des Mehrachssystems 10 angeordnet werden. Die Position der temporären Marker (nicht dargestellt) kann vom AR-System 23 unter Zuhilfenahme der bisherigen Marker 15 ermittelt werden. Eine Kalibrierung der temporären Marker ist nicht erforderlich. Anstelle von temporären Markern können auch bereits bestehende Referenzpunkte, z.B. Eckpunkte von unbeweglichen Objekten oder ähnliches, als temporäre Marker verwendet werden.

In einem nächsten Schritt erfolgt die Definition der Hüllkörper für die Komponenten (Segmente 11, Gelenke 12, Werkzeug 13) des Mehrachssystems 10.
Mit Hilfe eines (z.B. nutzergeführten) Hilfsmarkers und des Eingabegeräts werden Stützpunkte der Hüllkörper 11H, 13H definiert. Ein Hüllkörper 11H, 13H kann beispielsweise die Gestalt eines Quaders haben, der durch eine Anzahl an Eckpunkten definiert ist. Ist der Hüllkörper eine Kugel, so kann die Kugel durch wenigstens drei Punkte auf der Kugeloberfläche definiert werden. Ein Nutzer hält den Hilfsmarker an die gewünschte Position eines Stützpunktes und aktiviert das Eingabegerät. Dies veranlasst das AR-System 23, die Position des Hilfsmarkers zu berechnen. Die Berechnung erfolgt anhand der Bilddaten und der in den Bilddaten enthaltenen Marker 15, deren Position in dem ersten, globalen Koordinatensystem bekannt ist. Sind alle Stützpunkte für einen Hüllkörper 11H, 13H eingegeben, wird der Hüllkörper 11H, 13H berechnet und in der funktional sicheren Steuerung 21 gespeichert. Dies wird für alle Komponenten des Mehrachssystems 10 wiederholt. Bei der Definition der Hüllkörper 11H, 13H ist zu beachten, dass ein jeweiliger, einer Komponente 11, 13 zugeordneter Hüllkörper 11H, 13H die Komponente vollumfänglich umschließt.
Alternativ kann die Art und Dimension eines Hüllkörpers definiert werden, z.B. Quader, Kugel oder ähnliches. Anschließend wird der Hüllkörper interaktiv über das Eingabegerät und Kontrolle durch die Ausgabevorrichtung platziert, indem der Hilfsmarker an die entsprechende Position und Orientierung bewegt wird. Mit Hilfe des Eingabegeräts 24 wird die korrekte Position und Orientierung bestätigt. Anschließend können Dimension, Position und Orientierung des platzierten Hüllkörpers auf ähnliche Weise angepasst werden, bis eine gewünschte Genauigkeit erreicht ist.
Nachdem alle Hüllkörper definiert wurden, werden die Hüllkörper in Schutzräume, Arbeitsräume und Hüllkörper eingeteilt. Die Hüllkörper werden den einzelnen Komponenten (Segmente 11, Werkzeug 13, Gelenke 12) der Kinematik des Mehrachssystems 10 zugeordnet. Es versteht sich, dass der oder die Schutz- und Arbeitsräume im Zuge der Definition der Körper oder vorab erstellt worden sein können.

Die Überprüfung der definierten Hüllkörper 11H,13H erfolgt dadurch, dass die funktional sichere Steuerung 21 die Position der Hüllkörper ggf. in Abhängigkeit aktueller Positionen der Segmente 11, 13 des Mehrachssystems 10 berechnet. Das AR-System 23 liest die aktuelle Position und Orientierung der Hüllkörper 11H, 13H sowie des Schutzraums 19 aus der funktional sicheren Steuerung 21 ein. Anschließend transformiert das AR-System 23 die Hüllkörper 11H, 13H bzw. den Schutzraum 19 entsprechend der Position und Orientierung des Kamerasystems 26. Die Hüllkörper 11H, 13H und der oder die Arbeitsräume 18 sowie der oder die Schutzräume 19 werden mit dem tatsächlichen Bild des Kamerasystems 26 überlagert und auf der Ausgabevorrichtung 25 dargestellt. Der Arbeitsraum ist lediglich schematisch mit dem Bezugszeichen 18 gekennzeichnet. In Fig.1 sind die Hüllkörper 11H für das Segment 11 und 13H für das Werkzeug 13 jeweils als Quader dargestellt. Lediglich beispielhaft ist ein Schutzraum 19, beispielhaft in Gestalt eines Quaders, visualisiert. Während einer Bewegung der Kinematik des Mehrachssystems 10 folgen - eine korrekte Definition der Hüllkörper vorausgesetzt - diese den jeweiligen Komponenten des Mehrachssystems 10. Mit Hilfe des AR-Systems kann dann geprüft werden, ob die zuvor definierten und gespeicherten Hüllkörper, Schutz- und Arbeitsräume mit der Realität übereinstimmen. Fehlerhaft wäre es z.B., wenn ein Hüllkörper zu klein ist, und ein Teil des Mehrachssystems nicht eingehüllt ist. Diese Prüfung kann manuell erfolgen, d.h. durch Betrachtung des augmentierten Kamerabildes. Alternativ kann die Prüfung auch automatisch erfolgen. Wenn z.B. das Mehrachssystem orange lackiert ist, die überlagerten Hüllkörper aber blau in der Visualisierung eingefärbt sind, darf im augmentierten Bild kein oranges Pixel mehr vorkommen. Diese Prüfung kann durch eine Bilderkennungssoftware erfolgen.

Falls nötig, kann das Kamerasystem 26 bewegt werden, um die Hüllkörper 11H, 13H und den oder die Arbeits- und/oder Schutzräume 18, 19 aus verschiedenen Blickwinkeln zu betrachten.

Für ein gegebenes Mehrachssystem, z.B. einen Sechs-Achs-Roboter, kann ein Schritt-für-Schritt-Prozess festgelegt werden, der durch die Definition der Hüllkörper führt. Auf diese Weise kann keine Komponente des Mehrachssystems vergessen werden.

### Bezugszeichenliste

- 1: Vorrichtung zur Inbetriebnahme eines Mehrachssystems

- 10: Mehrachssystem
- 11: Segment
- 11H: Hüllkörper des Segments 11
- 12: Gelenk
- 13: Werkzeug
- 13H: Hüllkörper des Werkzeugs 13
- 14: TCP (Tool Center Point)
- 15: Marker
- 18: Arbeitsraum
- 19: Schutzraum
- 20: Steuerung (SPS)
- 21: funktional sichere Steuerung (F-SPS)
- 22: Programmiergerät
- 23: AR-System
- 24: Eingabegerät
- 25: Ausgabevorrichtung
- 26: Kamerasystem
- 27: erste Kamera
- 27E: Erfassungsbereich der ersten Kamera 27
- 28: zweite Kamera
- 28E: Erfassungsbereich der zweiten Kamera 28
- 29: starre Verbindung

## Patentansprüche

1. Verfahren zur Inbetriebnahme eines Mehrachssystems (10), wobei das Mehrachssystem (10) als Komponenten eine Anzahl an Segmenten (11), die über jeweilige Gelenke (12) verbunden sind und durch eine Steuerung (20, 21) in einer oder mehreren Achsen bewegbar sind, und ein Werkzeug (13) umfasst, das mit einem der Segmente (11) verbunden ist und durch die Steuerung (20, 21) an eine vorgegebene Position bewegbar und ansteuerbar ist, wobei dem Mehrachssystem (10) ein Arbeitsraum (18), in dem ein Aufenthalt und/oder eine Bewegung der Komponenten erlaubt ist, und zumindest ein Schutzraum (19) zugeordnet ist, in welchen ein Eindringen der Komponenten nicht erlaubt ist,
**dadurch gekennzeichnet, dass**
- eine Mehrzahl an optischen Markern (15) in der Umgebung des Mehrachssystems (10) angeordnet wird,
wobei jeweils die Position der Marker (15) in dem Mehrachssystem (10) ermittelt wird, um es einem Augmented Reality (AR)-System (23) anhand der Marker (15) zu ermöglichen, die Position und Orientierung eines Kamerasystems (26) mit zumindest einer Kamera (27, 28), welches das Mehrachssystem (10) aus einer Umgebung erfasst, zu bestimmen;
- für jede der Komponenten ein Hüllkörper (11H, 13H) definiert und dieser zugeordnet wird, wobei ein einer Komponente zugeordneter Hüllkörper (11H, 13H) die zugeordnete Komponente, insbesondere vollständig, einschließt;
- eine Überprüfung der definierten Hüllkörper (11H, 13H) in Bezug auf den Arbeitsraum (18) und den Schutzraum (19) mittels des AR-Systems (23) durchgeführt wird, indem bei einer Bewegung des Mehrachssystems (10) im Raum die Position der Hüllkörper (11H, 13H) in einem ersten, globalen Koordinatensystem berechnet und in ein zweites Koordinatensystem entsprechend einer Position und Orientierung des Kamerasystems (26) transformiert wird, wobei die in das zweite Koordinatensystem transformierten Hüllkörper (11H, 13H) zusammen mit einem von dem Kamerasystem (26) aufgenommenen Bild in dem AR-System (23) visualisiert werden.

2. Verfahren nach Anspruch 1, bei dem Positionskoordinaten der optischen Marker (15) in dem ersten, globalen Koordinatensystem ermittelt und in der Steuerung (20, 21) gespeichert werden.

3. Verfahren nach Anspruch 2, bei dem zur Ermittlung der Positionskoordinaten der optischen Marker (15) ein TCP des Werkzeugs (13) des Mehrachssystems (10) auf einen jeweiligen optischen Marker (15) bewegt wird und die der Steuerung (20, 21) bekannten Positionskoordinaten des TCP als die Positionskoordinaten des optischen Markers (15) ermittelt und gespeichert werden.

4. Verfahren nach Anspruch 2, bei dem zur Ermittlung der Positionskoordinaten eines jeweiligen optischen Markers (15) eine auf dem Werkzeug (13), insbesondere dem TCP, angebrachte Markierung und der gerade verarbeitete optische Marker (15) durch das AR-System (23) erfasst werden und eine Entfernung zwischen der Markierung und dem optischen Marker (15) ermittelt wird, wobei die Position des Werkzeugs (13) iterativ verändert wird, bis die Entfernung minimal ist, wobei die der Steuerung (20, 21) bekannten Positionskoordinaten des Werkzeugs (13), insbesondere des TCP, als die Positionskoordinaten des optischen Markers (15) ermittelt und gespeichert werden.

5. Verfahren nach Anspruch 4, bei dem die Markierung eine optische Markierung oder eine Entfernungsmeßeinheit ist.

6. Verfahren nach Anspruch 4 oder 5, bei dem die Entfernung durch die Entfernungsmeßeinheit ermittelt und an das AR-System (23)/ die Steuerung (20, 21) zur Auswertung übertragen wird.

7. Verfahren nach einem der vorhergehenden Ansprüche, bei dem die Positionskoordinaten der optischen Marker (15) an das AR-System (23) übertragen werden, wobei das AR-System (23) anhand der optisch erfassten Marker (15) und den zugeordneten Positionskoordinaten die Position und Orientierung des Kamerasystems (26) in dem ersten, globalen Koordinatensystem ermittelt.

8. Verfahren nach einem der Ansprüche 1 bis 7, bei dem zur Definition eines jeweiligen Hüllkörpers (11H, 13H) eine Anzahl an Positionskoordinaten eines temporär in der Umgebung des Mehrachssystems (10) angeordneten Hilfsmarkers durch das Kamerasystem (16) erfasst und dessen Positionskoordinaten durch das AR-System ermittelt werden.

9. Verfahren nach einem der Ansprüche 1 bis 7, bei dem zur Definition eines jeweiligen Hüllkörpers (11H, 13H) dieser nach Art und Dimension der Komponente erzeugt und in dem AR-System (23) mittels eines in der Umgebung des Mehrachssystems (10) angeordneten Hilfsmarkers iterativ solange hinsichtlich Position und Orientierung verändert wird, bis dieser die zugeordnete Komponente einhüllt.

10. Verfahren nach einem der vorhergehenden Ansprüche, bei dem in dem AR-System (23) der Arbeitsraum (18) und der zumindest eine Schutzraum (19) visualisiert werden.

11. Verfahren nach einem der vorhergehenden Ansprüche, bei dem der Schritt des Überprüfens umfasst, ob die definierten Hüllkörper und/oder Schutzräume mit der Realität übereinstimmen.

12. Verfahren nach einem der vorhergehenden Ansprüche, bei dem der Schritt des Überprüfens während einer der Bewegung des Mehrachssystems (10) durchgeführt wird.

13. Verfahren nach einem der vorhergehenden Ansprüche, bei dem eine Anzahl an weiteren, temporären Markern (15) in der Umgebung des Mehrachssystems (10) angeordnet werden, wobei die Positionskoordinaten der Anzahl an temporären Markern (15) durch Bildverarbeitung eins Bilds, in dem die Anzahl an temporären Markern (15) und die Mehrzahl an optischen Markern (15) enthalten sind, erfolgt.

14. Computerprogrammprodukt, das direkt in den internen Speicher eines digitalen Computers geladen werden kann und Softwarecodeabschnitte umfasst, mit denen die Schritte gemäß einem der vorhergehenden Ansprüche ausgeführt werden, wenn das Produkt auf einem Computer läuft.

15. Vorrichtung zur Inbetriebnahme eines Mehrachssystems (10), wobei das Mehrachssystem (10) als Komponenten eine Anzahl an Segmenten (11), die über jeweilige Gelenke (12) verbunden sind und in einer oder mehreren Achsen bewegbar sind, und ein Werkzeug (13) umfasst, das mit einem der Segmente (11) verbunden ist und an eine vorgegebene Position bewegbar und ansteuerbar ist, wobei dem Mehrachssystem (10) ein Arbeitsraum (18), in dem ein Aufenthalt und/oder eine Bewegung der Komponenten erlaubt ist, und zumindest ein Schutzraum (19) zugeordnet ist, in welchen ein Eindringen der Komponenten nicht erlaubt ist,
**gekennzeichnet durch**
- eine Steuerung (20, 21) zur Ansteuerung der Komponenten des Mehrachssystems (10);
- ein Kamerasystem (26) mit zumindest einer Kamera (27, 28), welches das Mehrachssystem (10) aus einer Umgebung erfasst;
- ein Augmented Reality (AR)-System (23), das das von dem Kamerasystem (26) erfasste Bild erfasst und verarbeitet und dazu eingerichtet ist, für jede der Komponenten einen Hüllkörper (11H, 13H) zu definieren und dieser zuzuordnen, wobei ein einer Komponente zugeordneter Hüllkörper (11H, 13H) die zugeordnete Komponente, insbesondere vollständig, einschließt;
- eine Mehrzahl an optischen Markern (15) in der Umgebung des Mehrachssystems (10), um es dem AR-System zu ermöglichen, die Position und Orientierung des die Umgebung des Mehrachssystems (10) erfassenden Kamerasystems (26) zu bestimmen, wobei die Vorrichtung ausgebildet ist, jeweils die Position der Marker (15) in dem Mehrachssystem (10) zu ermitteln, um es einem Augmented Reality (AR)-System (23) anhand der Marker (15) zu ermöglichen, die Position und Orientierung des Kamerasystems (26) mit zumindest einer Kamera (27, 28), welches das Mehrachssystem (10) aus einer Umgebung erfasst, zu bestimmen;
- eine Ausgabevorrichtung (25) des AR-Systems (23), die eingerichtet ist, eine Überprüfung der definierten Hüllkörper (11H, 13H) in Bezug auf den Arbeitsraum (18) und den Schutzraum (19) durchzuführen, indem bei einer Bewegung des Mehrachssystems (10) im Raum die Position der Hüllkörper (11H, 13H) in einem ersten, globalen Koordinatensystem berechnet und in ein zweites Koordinatensystem entsprechend einer Position und Orientierung des Kamerasystems (26) transformiert wird, wobei die in das zweite Koordinatensystem transformierten Hüllkörper (11H, 13H) zusammen mit dem von dem Kamerasystem (26) aufgenommenen Bild in der Ausgabevorrichtung des AR-Systems (23) visualisiert werden.

## Claims

1. Method for the start-up operation of a multi-axis system (10), wherein the multi-axis system (10) comprises, as components, a number of segments (11), which are connected via respective joints (12) and are movable by a controller (20, 21) in one or more axes, and a tool (13), which is connected to one of the segments (11) and is movable and drivable to a specified position by the controller (20, 21), wherein a workspace (18), in which a presence and/or a movement of the components is permitted, and at least one protection space (19), which the components are not permitted to penetrate, are assigned to the multi-axis system (10),
**characterized in that**
- a plurality of optical markers (15) are arranged in the surrounding area of the multi-axis system (10),
wherein in each case the position of the markers (15) in the multi-axis system (10) is ascertained in order to make it possible for an augmented reality (AR) system (23), on the basis of the markers (15), to determine the position and orientation of a camera system (26) having at least one camera (27, 28), which captures the multi-axis system (10) from a surrounding area;
- for each of the components, one bounding body (11H, 13H) is defined and assigned thereto, wherein a bounding body (11H, 13H) that is assigned to a component encloses the assigned component, in particular completely;
- a check of the defined bounding bodies (11H, 13H) is carried out in relation to the workspace (18) and the protection space (19) by means of the AR system (23) by calculating, in the case of a movement of the multi-axis system (10) in space, the position of the bounding bodies (11H, 13H) in a first, global coordinate system and transforming it to a second coordinate system corresponding to a position and orientation of the camera system (26), wherein the bounding bodies (11H, 13H), which have been transformed to the second coordinate system, are visualized in the AR system (23) together with an image recorded by the camera system (26).

2. Method according to Claim 1, in which position coordinates of the optical markers (15) in the first, global coordinate system are ascertained and stored in the controller (20, 21).

3. Method according to Claim 2, in which, for ascertaining the position coordinates of the optical markers (15), a TCP of the tool (13) of the multi-axis system (10) is moved onto a respective optical marker (15) and the position coordinates of the TCP that are known to the controller (20, 21) are ascertained as the position coordinates of the optical marker (15) and stored.

4. Method according to Claim 2, in which, for ascertaining the position coordinates of a respective optical marker (15), a mark that is provided on the tool (13), in particular the TCP, and the just processed optical marker (15) are captured by the AR system (23) and a distance between the mark and the optical marker (15) is ascertained, wherein the position of the tool (13) is iteratively changed until the distance is minimum, wherein the position coordinates of the tool (13), in particular the TCP, that are known to the controller (20, 21) are ascertained as the position coordinates of the optical marker (15) and stored.

5. Method according to Claim 4, in which the mark is an optical mark or a distance measuring unit.

6. Method according to Claim 4 or 5, in which the distance is ascertained by the distance measuring unit and transmitted to the AR system (23)/the controller (20, 21) for evaluation.

7. Method according to one of the preceding claims, in which the position coordinates of the optical markers (15) are transmitted to the AR system (23), wherein the AR system (23) ascertains the position and orientation of the camera system (26) in the first, global coordinate system on the basis of the optically captured markers (15) and the assigned position coordinates.

8. Method according to one of Claims 1 to 7, in which, for defining a respective bounding body (11H, 13H), a number of position coordinates of an auxiliary marker that is temporarily arranged in the surrounding area of the multi-axis system (10) is captured by the camera system (16) and the position coordinates thereof are ascertained by the AR system.

9. Method according to one of Claims 1 to 7, in which, for defining a respective bounding body (11H, 13H), the latter is produced according to the type and dimension of the component and is iteratively changed in the AR system (23) by way of an auxiliary marker, which is arranged in the surrounding area of the multi-axis system (10), with respect to position and orientation until it completely bounds the assigned component.

10. Method according to one of the preceding claims, in which the workspace (18) and the at least one protection space (19) are visualized in the AR system (23).

11. Method according to one of the preceding claims, in which the checking step comprises checking whether the defined bounding bodies and/or protection spaces match reality.

12. Method according to one of the preceding claims, in which the checking step is performed during the movement of the multi-axis system (10).

13. Method according to one of the preceding claims, in which a number of further, temporary markers (15) are arranged in the surrounding area of the multi-axis system (10), wherein the position coordinates of the number of temporary markers (15) are determined by image processing of an image in which the number of temporary markers (15) and the plurality of optical markers (15) are contained.

14. Computer program product which can be loaded directly into the internal memory of a digital computer and comprises software code portions with which the steps in accordance with one of the preceding claims can be performed when the product runs on a computer.

15. Apparatus for the start-up operation of a multi-axis system (10), wherein the multi-axis system (10) comprises, as components, a number of segments (11), which are connected via respective joints (12) and are movable in one or more axes, and a tool (13), which is connected to one of the segments (11) and is movable and drivable to a specified position, wherein a workspace (18), in which a presence and/or a movement of the components is permitted, and at least one protection space (19), which the components are not permitted to penetrate, are assigned to the multi-axis system (10),
**characterized by**
- a controller (20, 21) for driving the components of the multi-axis system (10);
- a camera system (26) having at least one camera (27, 28), which captures the multi-axis system (10) from a surrounding area;
- an augmented reality (AR) system (23), which captures and processes the image captured by the camera system (26) and is set up to define, for each of the components, a bounding body (11H, 13H) and assign it thereto, wherein a bounding body (11H, 13H), which is assigned to a component, encloses the assigned component, in particular completely;
- a plurality of optical markers (15) in the surrounding area of the multi-axis system (10) to permit the AR system to determine the position and orientation of the camera system (26) capturing the surrounding area of the multi-axis system (10), wherein the apparatus is embodied to ascertain in each case the position of the markers (15) in the multi-axis system (10) to make it possible for an augmented reality (AR) system (23), on the basis of the markers (15), to determine the position and orientation of the camera system (26) having at least one camera (27, 28), which captures the multi-axis system (10) from a surrounding area;
- an output apparatus (25) of the AR system (23), which is set up to perform a check of the defined bounding bodies (11H, 13H) with respect to the workspace (18) and the protection space (19) by calculating, in the case of a movement of the multi-axis system (10) in space, the position of the bounding bodies (11H, 13H) in a first, global coordinate system and transforming it to a second coordinate system corresponding to a position and orientation of the camera system (26), wherein the bounding bodies (11H, 13H), which have been transformed to the second coordinate system, are visualized in the output apparatus of the AR system (23) together with the image recorded by the camera system (26).

## Revendications

1. Procédé de mise en service d'un système (10) à plusieurs axes, le système (10) à plusieurs axes comprenant comme composants un certain nombre de segments (11), qui sont reliés par des articulations (12) respectives et qui peuvent être déplacés dans un ou plusieurs axes par une commande (20, 21), et un outil (13), qui est relié à l'un des segments (11) et qui peut être mis par la commande (20, 21) en une position donnée à l'avance et être commandé, dans lequel au système (10) à plusieurs axes est associé un espace (18) de travail, dans lequel un séjour et/ou un déplacement des composants est autorisé, et au moins un espace (19) protégé, dans lequel une pénétration des composants n'est pas autorisée,
**caractérisé en ce que**
- on met une pluralité de repères (15) optiques dans l'environnement du système (10) à plusieurs axes,
- dans lequel on détermine respectivement la position des repères (15) dans le système (10) à plusieurs axes pour rendre possible à un système (23) de réalité augmentée (AR) de déterminer, à l'aide des repères (15), la position et l'orientation d'un système (26) à appareil photographique ayant au moins un appareil (27, 28) photographique, qui prend le système (10) à plusieurs axes dans un environnement ;
- pour chacun des composants on définit un corps (11H, 13H) d'enveloppe et on l'associe à celui-ci, un corps (11H, 13H) d'enveloppe associé à un composant enfermant, notamment complètement, le composant associé ;
- on effectue un contrôle, au moyen du système (23) AR, des corps (11H, 13H) d'enveloppe définis par rapport à l'espace (18) de travail et à l'espace (19) protégé, en calculant, pour un déplacement du système (10) à plusieurs axes dans l'espace, la position des corps (11H, 13H) d'enveloppe dans un premier système global de coordonnées et en la transformant dans un deuxième système de coordonnées conformément à une position et à une orientation du système (26) à appareil photographique, les corps (11H, 13H) d'enveloppe transformés dans le deuxième système de coordonnées étant visualisés dans le système (23) AR ensemble avec une image prise par le système (26) à appareil photographique.

2. Procédé suivant la revendication 1, dans lequel on détermine les coordonnées de position des repères (15) optiques dans le premier système global de coordonnées et on les met en mémoire dans la commande (20, 21).

3. Procédé suivant la revendication 2, dans lequel, pour la détermination des coordonnées de position des repères (15) optiques on déplace un TCP de l'outil (13) du système (10) à plusieurs axes sur un repère (15) optique respectif et on détermine et met en mémoire comme coordonnées de position du repère (15) optique les coordonnées de position du TCP connues de la commande (20, 21).

4. Procédé suivant la revendication 2, dans lequel, pour la détermination des coordonnées de position d'un repère (15) optique respectif, on détecte par le système (23) AR un repérage mis sur l'outil (13), notamment sur le TCP, et le repère (15) optique traité précisément et on détermine une distance entre le repérage et le repère (15) optique, dans lequel on modifie itérativement la position de l'outil (13) jusqu'à ce que la distance soit minimum, dans lequel on détermine et on met en mémoire les coordonnées de position connues de la commande (20, 21) de l'outil (13), notamment du TCP, comme coordonnées de position du repère (15) optique.

5. Procédé suivant la revendication 4, dans lequel le repérage est un repérage optique où une unité de mesure de distance.

6. Procédé suivant la revendication 4 ou 5, dans lequel on détermine la distance par l'unité de mesure de distance et on la transmet pour exploitation au système (23) AR/ à la commande (20, 21) .

7. Procédé suivant l'une des revendications précédentes, dans lequel on transmet les coordonnées de position des repères (15) optiques au système (23) AR, le système (23) AR déterminant, à l'aide des repères (15) détectés optiquement et des coordonnées de position associées, la position du système (26) d'appareil photographique dans le premier système global de coordonnées.

8. Procédé suivant l'une des revendications 1 à 7, dans lequel, pour la définition d'un corps (11H, 13H) d'enveloppe respectif, on détecte, par le système (16) à appareil photographique, un nombre de coordonnées de position d'un repère auxiliaire, mis temporairement dans l'environnement du système (10) à plusieurs axes, et on en détermine les coordonnées de position par le système AR.

9. Procédé suivant l'une des revendications 1 à 7, dans lequel, pour la définition d'un corps (11H, 13H) d'enveloppe respectif, on produit celui-ci selon le type et la dimension du composant et on le transforme dans le système (23) AR, au moyen d'un repère auxiliaire mis dans l'environnement du système (10) à plusieurs axes, itérativement en ce qui concerne la position et l'orientation jusqu'à ce que celui-ci enveloppe le composant associé.

10. Procédé suivant l'une des revendications précédentes dans lequel on visualise dans le système (23) AR l'espace (18) de travail et le au moins un espace (19) protégé.

11. Procédé suivant l'une des revendications précédentes dans lequel le stade de contrôle comprend le point de savoir si les corps d'enveloppe définis et/ou les espaces protégés coïncident avec la réalité.

12. Procédé suivant l'une des revendications précédentes dans lequel on effectue le stade de contrôle pendant l'un des déplacements du système (10) à plusieurs axes.

13. Procédé suivant l'une des revendications précédentes dans lequel on met un nombre d'autres repères (15) temporaires dans l'environnement du système (10) à plusieurs axes, les coordonnées de position du nombre de repères (15) temporaires s'effectuant par traitement d'image d'une image, dans laquelle sont contenus le nombre de repères (15) temporaires et la pluralité de repères (15) optiques.

14. Produit de programme d'ordinateur, qui peut être chargé directement dans la mémoire interne d'un ordinateur numérique et qui comprend des parties de codes de logiciels, par lesquelles les stades, suivant l'une des revendications précédentes, sont exécutés lorsque le produit passe sur un ordinateur.

15. Installation de mise en service d'un système (10) à plusieurs axes, le système (10) à plusieurs axes comprenant comme composants un certain nombre de segments (11), qui sont reliés par des articulations (12) respectives et qui peuvent être déplacés dans un ou plusieurs axes par une commande (20, 21), et un outil (13), qui est relié à l'un des segments (11) et qui peut être mis par la commande (20, 21) en une position donnée à l'avance et être commandé, dans lequel au système (10) à plusieurs axes est associé un espace (18) de travail, dans lequel un séjour et/ou un déplacement des composants est autorisé, et au moins un espace (19) protégé, dans lequel une pénétration des composants n'est pas autorisée,
**caractérisé par**
- une commande (20, 21) pour la commande des composants du système (10) à plusieurs axes ;
- un système (26) à appareil photographique ayant au moins un appareil (27, 28) photographique, qui prend le système (10) à plusieurs axes dans un environnement ;
- un système (23) à réalité augmentée (AR), qui prend et traite l'image prise par le système (26) à appareil photographique et est conçu pour définir pour chacun des composants un corps (11H, 13H) d'enveloppe et pour l'associer à celui-ci, un corps (11H, 13H) d'enveloppe, associé à un composant, enfermant le composant associé, notamment complètement ;
- une pluralité de repères (15) optiques dans l'environnement du système (10) à plusieurs axes, afin de permettre au système AR de déterminer la position et l'orientation du système (26) à appareil photographique prenant l'environnement du système '10) à plusieurs axes, l'installation étant constituée pour déterminer respectivement la position des repères (15 dans le système (10) à plusieurs axes afin de permettre à un système (23) à réalité augmentée AR, à l'aide des repères (15), de déterminer la position et l'orientation du système (26) à appareil photographique ayant au moins un appareil (27, 28) photographique, qui prend le système (10) à plusieurs axes dans un environnement ;
- un dispositif (25) de sortie du système (23) AR, qui est conçu pour effectuer un contrôle du corps (11H, 13H) d'enveloppe défini par rapport à l'espace (18) de travail et à l'espace (19) protégé, en calculant, pour un déplacement du système (10) à plusieurs axes dans l'espace, la position des corps (11H, 13H) d'enveloppe dans un premier système global de coordonnées et en la transformant dans un deuxième système de coordonnées conformément à une position et à une orientation du système (26) à appareil photographique, les corps (11H, 13H) d'enveloppe transformés dans le deuxième système de coordonnées, étant visualisés, ensemble avec l'image prise par le système (26) à appareil photographique, dans le dispositif de sortie du système (23) AR.
